# EUROPEAN PATENT APPLICATION

(11) **EP 1 067 527 A1**
(43) Date of publication of application: **10.01.2001**
(21) Application number: 99113284.6
(22) Date of filing: 08.07.1999
(51) Int. Cl.: G11B 7/09

(54) **Actuator with high precision element positioning**

(71) Applicant: DEUTSCHE THOMSON-BRANDT GMBH, 78048 Villingen-Schwenningen (DE)
(72) Inventor: Kaaden, Jürgen, Thomson Multimedia, 92648 Boulogne Billancourt (FR); Weisser, Fritz, Thomson Multimedia, 92648 Boulogne Billancourt (FR)
(74) Representative: Kohrs, Martin

(57) **Abstract**

An actuator for use in CD or DVD players/recorders comprises a holder plate (22b) which has bent portions (23,24) as magnet holders and openings (27,28) for receiving magnet return closings, the latter being bent portions of a base plate. Both holder and base plate are rigidly fixed between each other.

## Description

The invention relates to a pick-up of an optical disc player and/or recorder and more particularly to an actuator used in such a pick-up.

An actuator may be used to position an element in a pick-up of an optical disc player and/or recorder, such as for example in Compact Disc or Digital Versatile Disc drives. The actuator may for example position a lens to focus a light beam on a spot of the optical disc or to assure a positioning of the light beam relative to a track to read and/or to record data.

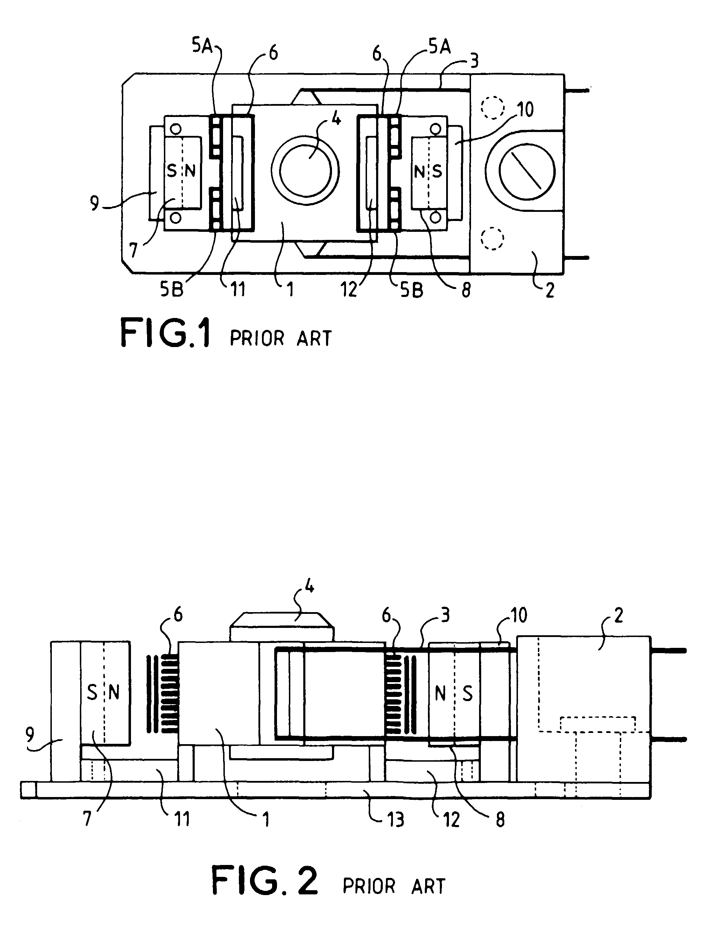

Fig.1 shows a top view of a known actuator which is used in an optical disc drive's pick-up. A lens holder 1 is attached to an actuator holder 2 by means of a suspension 3. The lens holder carries a lens 4 which needs to be moved for focusing and tracking purposes. The forces to move the lens holder 1 are generated by the interaction of magnetic fields (not shown). Focus coils 6 are rigidly fixed at opposite extremities of the lens holder 1 and a pair of tracking coils 5A and 5B are mounted on the focus coils 6. The focus and tracking coils 5A, 5B and 6 may be fed with appropriate electrical currents and interact with magnetic fields produced by magnets 7 and 8, thereby transmitting forces for focus and tracking motion to the lens holder 1.

The magnets 7 and 8 are respectively mounted on magnet holders 9 and 10 showing each a same first pole, i.e., a South pole 5 to the magnet holders 9 and 10. Magnetic fields (not shown) produced by each magnet 7 and 8 are guided through the magnet holders to return closings 11 and 12 which end in proximity of the magnets 7 and 8. This way the magnetic fields are bundled and guided on their way from the first to the second pole of the magnets 7 and 8.

Fig.2 shows a side view of the actuator seen in Fig.1. the magnet holder 9 and 10, and the return closings 11 and 12 are connected in a U-shape in which the lower portion is mounted on a base plate 13, and the extremities facing each other are parallel rising perpendicularly away from the base plate 13. This way the return closings 11 and 12 penetrate inside the focus coils 6.

The lens holder 1 is mounted to the actuator holder 2 by means of the suspension 3 such that the focus coils 6 may move around the return closings 11 and 12 towards or away from the base plate 13, or parallel to the base plate 13.

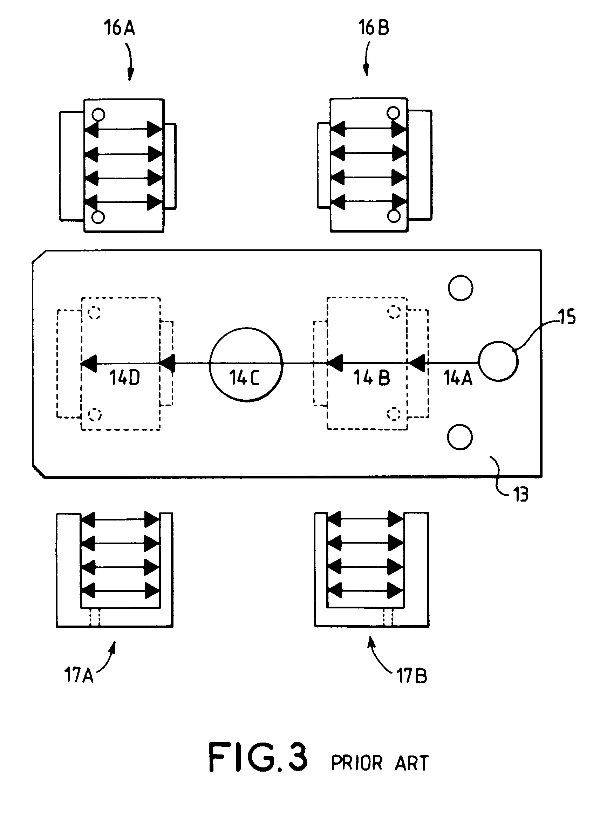

Fig. 3 shows selected parts from the actuator out of Figs 1 and 2 separately. The base plate 13 is shown from a top a view with the location of the U-shaped magnet holder/return closing assemblies represented in doted lines. It is particularly important to precisely position these assemblies on the plate holder in order to obtain an efficiently working actuator. Successive positioning arrows 14 A, B, C and D indicate critical dimensions measured from a reference point 15, which need to be respected during manufacturing of the actuator. Alongside the base plate 13, the magnet holder/return closing assemblies 16A and 16B are shown in a top view. Double sided arrows in each assembly indicate critical dimensions which much be precisely manufactured between the magnet holder and the return closing. On another side of the base plate 13 the magnet holder/return closing assemblies 17A and 17B are shown in a side view with double sided arrows indicating critical dimensions to achieve between magnet and return closing at manufacturing of the assembly. In fact the magnet holder and the return closing are substantially parallel, and perpendicular to the lower portion which connects them.

As may be seen on the example assemblies 17A and 17B, the magnet holder and the return closing may have different thicknesses due to specific requirement of the actuator.

An assembly of magnet holder and return closing may for example be manufactured by bending a plate twice at right angles. The different thicknesses of magnet holder and return closing may be achieved by a thinning punching process, e.g. of the return closing in Fig.3. The processes of bending and punching are relatively expensive and difficult to realize since the size of the assembly is relatively small and the precision to achieve is high for an efficient actuator build-up.

It is an object of the invention to provide a solution to the above mentioned manufacturing processes, i.e., provide a more precise actuator build-up at lesser expense.

It is another object of the invention to reduce a complexity of an actuator of the prior art.

Accordingly, the invention provides an actuator for use in a pick-up of an optical disc player and/or recorder, which comprises at least:
- a magnet,
- a magnet holder on which a first pole of the magnet is mounted,
- a return closing to guide a magnetic field providing from the magnet from the first pole towards a second pole,
- a base plate from which the magnet holder and the return closing rise.

The actuator further comprises a holder plate. The return closing is a portion of the base plate which is bent in a first determined angle away from a plane of the base plate. The magnet holder is a portion of the holder plate which is bent in a second determined angle away from a plane of the holder plate. The holder plate has an opening through which the return closing is inserted, the holder plate and the base plate being rigidly fixed between each other.

Advantageously the inventive actuator may be obtained by bending relatively large plates, which is easier than to work small pieces as in prior art.

Also advantageously the dimensions and the positioning of the inventive actuator may easily be made the same as for the prior art actuator.

The invention will in the following be described using examples and figures 1 to 7, wherein
Fig.1 contains a top view of an actuator according to prior art,
Fig.2 contains a side view of an actuator according to prior art,
Fig.3 contains a schematic diagram of a base plate and magnet holder/return closing assemblies,
Fig.4 shows upper and side views of a base plate with return closings,
Fig.5 shows upper and side views of a holder plate with magnet holders,
Fig.6 shows upper and side views of a base plate and a holder plate,
Fig.7 shows an upper view of a base plate and a holder plate.

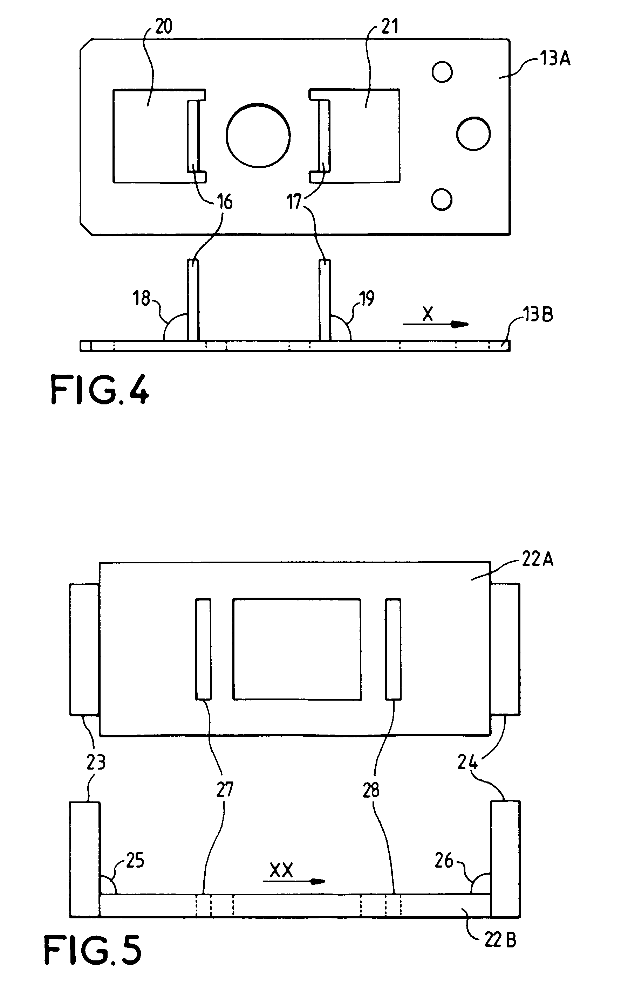

Fig.4 shows a base plate in an upper view and in a side view referenced 13A and 13B respectively. Different references 13A and 13B are used to distinguish between different views of the same base plate.

The base plate is shown alone, i.e., exempt of other parts which normally make up the actuator, for reasons of clarity and better understanding.

Return closings 16 and 17 rise from the base plate 13B. More precisely the return closings 16 and 17 are made from portions of the base plate which are bent in a first and a third determined angle 18 and 19 respectively, away from a plane of the base plate, i.e., a plane defined as being perpendicular to the support of the drawing in Figure 4 and being parallel to an arrow X, which in turn in parallel to the base plate 13B. In Figure 4 the first and third determined angles 18 and 19 are both equal to 90 degrees. The bending of portions of the base plate to obtain the return closings 16 and 17 creates holes 20 and 21 in the base plate 13A.

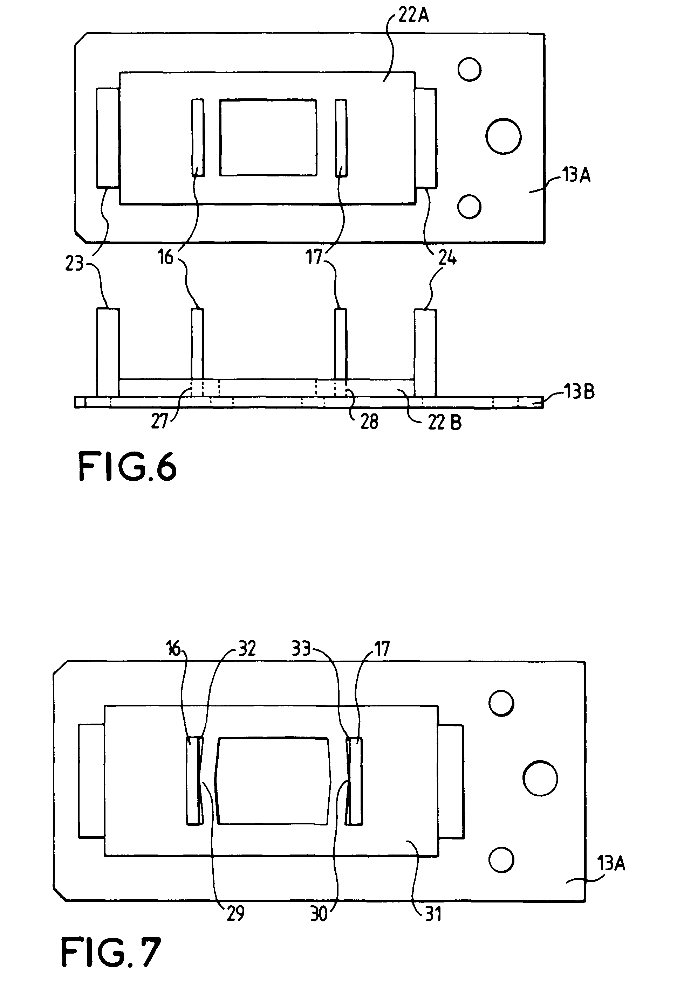

Fig. 5 shows a holder plate in an upper view and in a side view referenced 22A and 22B. The different references 22A and 23B are used to distinguish between different views of the same holder plate. The holder is shown alone, i.e., exempt of other parts which normally make up the actuator, for reasons of clarity and better understanding. Magnet holders 23 and 24 rise from the holder plate 22B. More precisely the magnet holders 23 and 24 are made from portions of the holder plate 22B, i.e. portions at opposed extremities of the base plate 22B which are bent in a second and fourth determined angle 25 and 26 respectively, away from a plane of the holder plate. The plane of the holder plate is here defined as being perpendicular to the support of the drawing in Fig. 5 and being parallel to an arrow XX, which in turn is parallel to the holder plate 22B. In Fig. 5, the second and fourth determined angles 25 and 26 are both equal to 90 degrees.

The holder plate 22B further comprises two openings 27 and 28 which are dimensioned and positioned such that the return closings 16 and 17 from the base plate 13B (shown in Fig. 4 but not in Fig. 5) may be inserted. Fig. 6 shows the base plate 13A, 13B and the holder plate 22A, 22B stacked above each other in an upper view (plates referenced with A) and in a side view (plates referenced with B). The return closings 16 and 17 have been inserted in the openings 27 and 28 of the holder plate 22B. The return closings 16 and 17, and the magnet holders 23 and 24 are parallel to each other. The stacked base and holder plates assembly may easily be completed with parts known from prior art such as a magnet, or lens holder and so on, similar as in Figs. 1 and 2, such to achieve an actuator assembly.

The base plate 13B and the holder plate 22B are rigidly fixed to each other. The rigid fixation may for example be achieved by gluing the plates to each other or applying a laser welding fixation.

In the shown example, a material used for the holder plate 22B is thicker than a material used for the base plate 13B, such that similar dimensions as those obtained for the magnet holder return closings assemblies 16A, 16B of prior art in Fig. 3, are achieved.

The stacked plate assembly in Fig. 6 shows that the magnet holders 23 and 24 are self centered in relation to the base plate 13B and to the return closings 16 and 17 during manufacturing due to the two openings 27 and 28 in the holder plate 22B. Typically, a positioning tolerance of 70 pm can be achieved. The positioning tolerance may be even further reduced to 30 µm by using metal ribs 29 and 30 shown in Fig. 7 in an upper view of another example for a stacked plate assembly. The assembly is based on the base plate 13A which provides the return closings 16 and 17. The metal ribs 29 and 30 are part of a holder plate 31 which is very similar to the holder plate 22B. The metal ribs 29 and 30 define one side of openings 32 and 33 in the holder plate 31 through which are insented the return closings 16 and 17. The metal ribs 29 and 30 may be deformed to adjust a positioning of the holder plate 31, and thus of the magnet holders it provides in relation to the return closings 16 and 17. The positioning may be checked using optical inspection or any other appropriate measuring method. The deformation of the metal ribs 29 and 30 may preferably be achieved using a specialized tool (not shown).

The embodiments described above relate to examples for realizing the invention and are not limitative. A person skilled in the art may well realize other embodiment while remaining in the scope of the present invention.

### LIST OF REFERENCES

1. Lens holder
2. Actuator holder
3. Suspension
4. Lens
5A, B. Tracking coil
6. Focus coil
7, 8. Magnet
9, 10. Magnet holders
11, 12. Return closings
13. Base plate
14A, B, C, D. Positioning arrows
15. Reference point
16, 17. Return closings
18. First determined angle
19. Third determined angle
20, 21. Holes in base plate
22A, 22B. Upper and side view of holder plate
23, 24. Magnet holders
25. Second determined angle
26. Fourth determined angle
27,28. Openings in the holder plate
29,30. Metal ribs
31. Holder plate
32,33. Openings

## Claims

1. Actuator for use in a pick-up of an optical disc player and/or recorder comprising at least
- a magnet (7,8)
- a magnet holder (9, 10) on which a first pole (s) of the magnet is mounted,
- a return closing (11, 12) to guide a magnetic field providing from the magnet, from the first pole towards a second pole (N) of the magnet,
- a base plate (13) from which the magnet holder and the return closing rise,
characterized in that it further comprises
- a holder plate, and that
- the return closing (13A, 13B, 31) is a portion of the base plate which is bent in a determined angle (18) away from a plane (X) of the base plate,
- the magnet holder (23, 24) is a portion of the holder plate which is bent in a second determined angle (25) away from a plane (XX) of the holder plate,
- the holder plate has an opening (27, 28, 32, 33) through which the return closing is inserted, the holder plate and the base plate being rigidly fixed between each other.

2. Actuator according to claim 1, wherein the first and second determined angles are substantially equal to 90 degrees, and the base and holder plates planes are parallel to each other.

3. Actuator according to claim 1 or 2, wherein the base plate and the holder plate have different thicknesses.

4. Actuator according to anyone of claims 1 to 3, wherein the actuator comprises a further return closing which is a portion of the base plate bent in the first angle away from the plane of the base plate, a further magnet holder which is a portion of the holder plate bent in the second angle away from the plane of the holder plate, the return closings and the magnet holders being parallel to each other.

5. Actuator according to anyone of claims 1 to 4, wherein the holder plate (31) comprises a deformable metal rib (29, 30) which is located on a side of the opening (32, 33).

6. Optical disc player and/or recorder characterized in that it comprises an actuator according to anyone of claims 1 to 5.
